# EUROPEAN PATENT APPLICATION

(11) **EP 4 084 379 A1**
(43) Date of publication of application: **02.11.2022**
(21) Application number: 20912536.8
(22) Date of filing: 07.01.2020
(51) Int. Cl.: H04L 1/18, H04W 28/02

(54) **METHOD AND APPARATUS FOR ACTIVATING OR DEACTIVATING RELIABLE TRANSMISSION**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Penza, Giancarlo
(86) International application number: PCT/CN2020/070680
(87) International publication number: WO 2021/138802

(57) **Abstract**

Provided is a method for activating or deactivating a reliable transmission. The method comprises: acquiring the maximum transmission time; and activating or deactivating a reliable transmission according to the maximum transmission time, wherein the reliable transmission comprises at least one of the following: a duplicated transmission mode, a repeated transmission mode, and a transmission mode comprising a target MCS. On the basis of the above-mentioned solution, a terminal device can activate a reliable transmission when data transmission fails and a transmission time does not exceed the maximum transmission time, the probability of successful data transmission within the maximum transmission time can be improved, and the transmission, which is not within the maximum transmission time, of other data is not affected.

## Description

### Technical Field

The present application relates to the field of communication, and specifically, to a method and apparatus for activating or deactivating a reliable transmission.

### Background

The 5th Generation (5G) mobile communication system supports the Industrial Internet of Things (HOT). Based on transmission requirements such as delay and reliability, HOT introduces concepts of Time Sensitive Network (TSN) or Time Sensitive Communication (TSC).

A time during which an application uses a communication service and may not receive an expected message may be referred to as a survival time. For an application or service, when the survival time is equal to one service cycle, after a previous data packet is failed in transmission, a latter data packet must be transmitted correctly. The survival time is a positive parameter for TSC services. How to use the survival time to meet the transmission requirements of TSC services is a problem that needs to be solved currently.

### Summary

The present application provides a method and an apparatus for activating or deactivating a reliable transmission, which can meet transmission requirements of TSC services by utilizing a survival time.

In a first aspect, a method for activating or deactivating a reliable transmission is provided, including: acquiring the maximum transmission time; and
activating or deactivating a reliable transmission according to the maximum transmission time, wherein the reliable transmission includes at least one of the following: a duplication transmission, a repetition transmission, and a transmission mode including a target MCS.

On the basis of the above-mentioned solution, a terminal device can activate a reliable transmission when data transmission is failed and a transmission time does not exceed the maximum transmission time, the probability of successful data transmission within the maximum transmission time can be improved, and a transmission, which is not within the maximum transmission time, of other data is not affected.

In a second aspect, another method for activating or deactivating a reliable transmission is provided, including: sending a maximum transmission time to a first terminal device; the maximum transmission time is used for the first terminal device to activate or deactivate a reliable transmission, wherein the reliable transmission including at least one of a duplication transmission, a repetition transmission, and a transmission mode including a target MCS.

On the basis of the above-mentioned solution, a terminal device can activate a reliable transmission when data transmission is failed and a transmission time does not exceed the maximum transmission time, the probability of successful data transmission within the maximum transmission time can be improved, and a transmission, which is not within the maximum transmission time, of other data is not affected.

In a third aspect, an apparatus for activating or deactivating a reliable transmission is provided, which may implement the functions corresponding to the method in the first aspect, and the functions may be implemented by hardware or corresponding software executed by hardware. The hardware or software includes one or more units or modules corresponding to the above functions.

In a possible design, the apparatus is a terminal device or a chip. The apparatus may include a processing unit and a transceiver unit. When the apparatus is a terminal device, the processing unit may be a processor and the transceiver unit may be a transceiver. The terminal device may further include a storage unit, which may be a memory. The storage unit is configured to store instructions, and the processing unit executes the instructions stored in the storage unit, enabling the terminal device to execute the method described in the first aspect. When the apparatus is a chip in the terminal device, the processing unit may be a processor, and the transceiver unit may be an input/output interface, pin or circuit, etc. The processing unit executes instructions stored in the storage unit, enabling the terminal device including the chip to execute the method described in the first aspect. The storage unit may be a storage unit in the chip (such as register, cache, etc.) or a storage unit outside the chip in the terminal device (such as read-only memory, random access memory, etc.).

In a fourth aspect, an apparatus for activating or deactivating a reliable transmission is provided, which may implement the functions corresponding to the method in the second aspect, and the functions may be implemented by hardware or corresponding software executed by hardware. The hardware or software includes one or more units or modules corresponding to the above functions.

In a possible design, the apparatus is a network device or a chip. The apparatus may include a processing unit and a transceiver unit. When the apparatus is a network device, the processing unit may be a processor and the transceiver unit may be a transceiver. The network device may further include a storage unit, which may be a memory. The storage unit is configured to store instructions, and the processing unit executes the instructions stored in the storage unit, enabling the network device to execute the method described in the second aspect. When the device is a chip in the network device, the processing unit may be a processor, and the transceiver unit may be an input/output interface, pin or circuit, etc. The processing unit executes instructions stored in the storage unit, enabling the network device including the chip to execute the method described in the second aspect. The storage unit may be a storage unit in the chip (such as register, cache, etc.) or a storage unit outside the chip in the network device (such as read-only memory, random access memory, etc.).

In a fifth aspect, a computer readable storage medium is provided. A computer program is stored in the computer readable storage medium. When the computer program is executed by a processor, the processor is enabled to execute the method described in the first aspect.

In a sixth aspect, a computer readable storage medium is provided. A computer program is stored in the computer readable storage medium. When the computer program is executed by a processor, the processor is enabled to execute the method described in the second aspect.

In a seventh aspect, a computer program product is provided, which includes computer program codes. When the computer program codes are executed by a processor, the processor is enabled to execute the method described in the first aspect.

In an eighth aspect, a computer program product is provided, which includes computer program codes. When the computer program codes are executed by a processor, the processor is enabled to execute the method described in the second aspect.

In a ninth aspect, a computer program is provided, wherein when the computer program is run on a computer, the computer is enabled to execute the method described in the first aspect.

In a tenth aspect, a computer program is provided, wherein when the computer program is run on a computer, the computer is enabled to execute the method described in the second aspect.

### Brief Description of Drawings

FIG. 1 is a schematic diagram of a communication system applied in the present application.
FIG. 2 is a schematic diagram of a duplication transmission method applied in the present application.
FIG. 3 is a schematic diagram of a method for activating or deactivating a reliable transmission according to the present application.
FIG. 4 is a schematic diagram of a method for acquiring a survival time according to an embodiment of the present application.
FIG. 5 is a schematic diagram of a method for activating a reliable transmission according to the present application.
FIG. 6 is a schematic diagram of another method for activating a reliable transmission according to the present application.
FIG. 7 is a schematic diagram of still another method for activating a reliable transmission according to the present application.
FIG. 8 is a schematic diagram of still another method for activating a reliable transmission according to the present application.
FIG. 9 is a schematic diagram of an apparatus for activating or deactivating a reliable transmission according to the present application.
FIG. 10 is a schematic diagram of another apparatus for activating or deactivating a reliable transmission according to the present application.
FIG. 11 is a schematic diagram of a communication device for activating or deactivating a reliable transmission according to the present application.

### Detailed Description

Technical solutions in embodiments of the present application will be described below with reference to the drawings in the embodiments of the present application. It is apparent that the embodiments described are just a part of embodiments of the present application, but not all of the embodiments of the present application. According to the embodiments of the present application, all other embodiments achieved by a person of ordinary skill in the art without making inventive efforts belong to the protection scope of the present application.

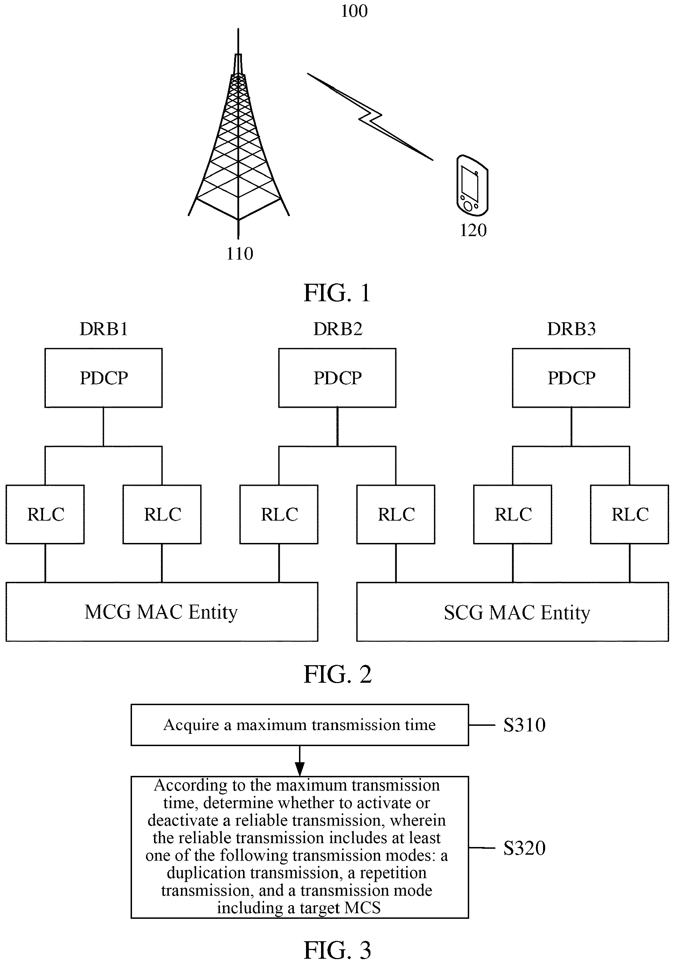

First, an application scenario of the present application is introduced. FIG. 1 is a schematic diagram of a communication system applied in the present application.

The communication system 100 includes a network device 110 and a terminal device 120. The terminal device 120 communicates with the network device 110 through electromagnetic waves.

In the present application, the terminal device 120 may include various handheld devices, vehicle-mounted devices, wearable devices, computing devices with a wireless communication function or other processing devices connected to wireless modems, such as user equipment (UE) defined by the 3rd generation partnership project (3GPP), mobile station (MS), soft terminals, home gateways, set-top boxes, etc.

The network device 110 may be a base station defined by 3GPP, for example a base station (gNB) in a 5G mobile communication system. The network device 110 may also be a non-3gpp access network device, such as an access gateway (AG). The network device 110 may also be a relay station, access point, vehicle-mounted device, wearable device and another type of device.

The communication system 100 is only an example, and the communication system applied in the present application is not limited thereto. For example, the number of network devices and terminal devices included in the communication system 100 may be another number.

In order to improve the transmission reliability, the communication system may adopt a transmission mode with high reliability, that is, a reliable transmission. The reliable transmission may include one or more of a duplication transmission, a repetition transmission, and a transmission mode including a target Modulation and Coding Scheme (MCS).

Repetition transmission means that an original version and at least one duplicate of the same packet are transmitted, or the same data packet is transmitted multiple times, redundant versions used in the multiple transmissions may be same or different.

A target MCS is an MCS which is preset, or pre-configured, or changed by a network, or indicated by a network. Specifically, the reliability of the MCS is high, or the index of the MCS is low.

Duplication transmission is to transmit multiple identical data packets. Duplication transmission is carried out at the Packet Data Convergence Protocol (PDCP) layer, and the same PDCP Packet Data Unit (PDU) is mapped to different Radio Link Control (RLC) entities. The Medium Access Control (MAC) layer needs to transmit duplication data from different RLC entities to different carriers, and can use Carrier Aggregation (CA) and/or Dual-Connectivity (DC) for duplication transmission. The total number of copies corresponding to one PDCP PDU may be up to 4.

For CA duplication transmission, copies of the PDCP PDU are transmitted to two RLC entities (two different logical channels) respectively, and finally ensuring that copies of the PDCP PDU can be transmitted on different aggregate carriers, so as to achieve frequency diversity gain and improve data transmission reliability. This is shown by the Data Radio Bearer (DRB) 1 and DRB3 in FIG. 2.

For DC duplication transmission, copies of the PDCP PDU are respectively transmitted to two RLC entities corresponding to two MAC entities, namely, a Master Cell Group (MCG) MAC entity and a Secondary Cell Group (SCG) MAC entity, as shown by DRB2 in FIG. 2.

Hereinafter an embodiment of the present application will be described taking the communication system 100 as an HOT as an example.

FIG. 3 illustrates a method for activating or deactivating a reliable transmission according to the present application. The method includes following acts.

In S310, a maximum transmission time is acquired.

In order to ensure the maintenance or activation of high-level applications, a terminal device needs to acquire the maximum transmission time in order to successfully send at least one data packet to a network device within the maximum transmission time. The maximum transmission time may be interpreted as a maximum time that a service or flow is allowed to be transmitted, or a maximum time that a service or flow may be transmitted continuously falsely, or a maximum time allowed for a service or flow, during which no packet or indication information is received. An example of the maximum transmission time is a survival time. In the following description, these two concepts are universal unless specifically stated.

The survival time may be preset, or configured or indicated by the first node. The first node may be a network device or another terminal device. The network device includes at least one of a gNB, a Central Network Control (CNC), and a TSN node.

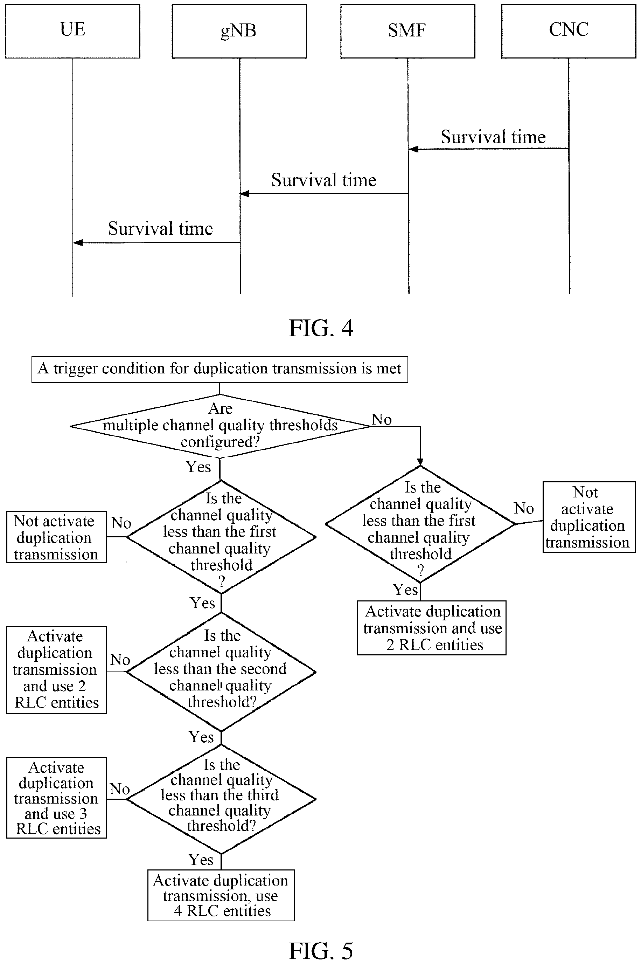

One method for terminal devices to acquire a survival time through network devices is shown in FIG. 4.

A Session Management Function (SMF) acquires configuration information from the CNC, which is used to configure the survival time of a PDU session.

SMF sends this configuration information to gNB.

The gNB transmits the survival time to the UE through a dedicated Radio Resource Control (RRC) and/or a broadcast message. Optionally, the gNB may configure a survival time for a particular DRB or Quality of Service (QoS) flow or PDU session or TSC flow or UE in the RRC reconfiguration message, i.e., a granularity corresponding to the survival time may be a DRB or QoS flow or PDU session or TSC flow or UE.

In addition, during a handover, a source base station can send the survival time to a target base station. That is, the target base station can acquire the survival time through the source base station. Further, the target base station sends the survival time to the UE in the handover command.

The terminal device can activate or deactivate the function of a reliable transmission according to the maximum transmission time.

Specifically, whether the terminal device activates or deactivates a reliable transmission according to the maximum transmission time may be preset, or may also be configured or controlled by the network. For example, if the network configures or indicates the UE to activate or deactivate a reliable transmission according to the maximum transmission time, the UE activates or deactivates the reliable transmission according to the maximum transmission time. For another example, if the UE acquires the maximum transmission time, the UE activates or deactivates the reliable transmission according to the maximum transmission time.

Optionally, the terminal device may perform the following acts.

S320, a reliable transmission is activated or deactivated according to the maximum transmission time, wherein the reliable transmission includes at least one of the following: a duplication transmission, a repetition transmission, and a transmission mode including a target MCS.

It should be noted that the transmission mode including a target MCS may also be understood as a configuration for achieving a reliable transmission or parameters for a reliable transmission.

It should be noted that a configuration of duplication transmission/repetition transmission may be understood as a configuration for achieving a reliable transmission or parameters for the reliable transmission.

When a reliable transmission is not activated, the terminal device can activate or deactivate the reliable transmission according to the maximum transmission time. Herein, deactivation may also be understood as inactivation. Or, in an inactive state, if it is determined that no reliable transmission is used, it is an inactive state; and in an active state, if it is determined that no reliable transmission is used, it is a deactivated state, etc.

Specifically, S320 may include at least one of:
activating the reliable transmission when the transmission of target data is failed;
deactivating the reliable transmission when the transmission of target data is successful;
activating the reliable transmission when a transmission time of the target data is less than the maximum transmission time and when the transmission of target data is failed;
deactivating the reliable transmission when a transmission time of the target data is less than the maximum transmission time and when the transmission of target data is successful; and
deactivating the reliable transmission when the transmission time of the target data is greater than or equal to the maximum transmission time. Further, the UE reports that the maximum transmission time has been exceeded or the transmission has failed.

The target data is data corresponding to a specific DRB or Quality of Service (QoS) flow or PDU session or TSC flow or UE.

The target data is specific data determined according to the maximum transmission time. The target data may be indicated by the network or determined according to rules.

The target data may be data to be transmitted or data that has been transmitted. If the transmission time of the target data is less than the survival time, the terminal device may activate the reliable transmission under the condition that the transmission of target data is failed, or the terminal device may activate the reliable transmission under the condition that the transmission of target data is successful. If the transmission time of the target data is greater than or equal to the survival time, the terminal device deactivates the reliable transmission.

For example, the survival time is 1 TSC service cycle, and the target data are packets which are transmitted falsely, or a first packet which is transmitted falsely, or a first packet which is not received successfully, or a first one of packets which are transmitted continuously falsely, or a first one of packets which are not received continuously successfully. If there is the target data, the terminal device activates the reliable transmission.

For example, the survival time is 2 TSC service cycles, and the target data is a second packet which is transmitted falsely, or a second one of packets which are transmitted continuously falsely, or a second one of packets which are not received continuously successfully. If there is target data, the terminal device activates a reliable transmission.

For example, the survival time is 3 TSC service cycles, and the target data is a first packet which is transmitted falsely, or a first one of packets which are not received continuously successfully. If the target data exists, the first timer is started, or the first value N is acquired through counting. The terminal device activates a reliable transmission when the first timer expires or when the first value is greater than or equal to the first value threshold.

The first value threshold is an example of a threshold of a number of tolerable failed packet transmissions, which may be determined based on a survival time. For example, if the terminal device can send data once in one TSC service cycle and the survival time is 3 TSC service cycles, the first value threshold may be 1 or 2. When the first value threshold is 1, the reliable transmission may be activated if the target data is transmitted falsely once or twice. When the first value threshold is 2, the reliable transmission may be activated when the target data is transmitted falsely twice, and the reliable transmission may be deactivated when the target data is transmitted falsely once. The first value threshold may also be the maximum number of transmissions, which in this example is 3.

In another implementation, the terminal device may activate a second timer to determine whether the transmission time exceeds the survival time.

For example, when the transmission of first data is completed or the first data is transmitted successfully, the second timer is started or restarted, wherein the first data is any data. The duration of the second timer is related to the survival time. Specifically, the second timer may be configured with the duration being the survival time. Accordingly, when the second timer expires, a reliable transmission may be activated.

In addition, the network may indicate or configure a timer (a first timer or a second timer), the timer used for activating a reliable transmission, i.e., once the timer expires, a reliable transmission may be activated. Or, the timer is used to avoid the case that data transmission does not meet the requirement of the maximum transmission time, the data is, for example, target data or n false packets, where n is a positive integer. For example, when there have been n false packets, the timer is not expired, then a reliable transmission is activated. Or, for example, when there have been n false packets, the timer is started, then when the timer expires, a reliable transmission is activated. Or, for example, when there have been n false packets, a reliable transmission is activated. If the timer expires, a reliable transmission is activated. Before the timer expires, when there is data that has been transmitted successfully, the timer is stopped. The timer is started at the first time point or started when target data exists.

For example, when the transmission of first data is completed or the first data is transmitted successfully, the second value M is acquired by re-counting, wherein the first data is any data. When the second value is greater than or equal to the threshold, a reliable transmission may be activated. This threshold is related to the survival time. In particular, the threshold may be configured as a survival time or a service transmission cycle, or the number of packet transmissions, or the maximum number of continuous false packet transmissions.

In another implementation, a reliable transmission may be deactivated based on the survival time. For example, when a reliable transmission is activated and the first packet transmitted is transmitted correctly, the reliable transmission is deactivated. For example, when a reliable transmission is activated and N packets or N successive packets are transmitted correctly, the reliable transmission is deactivated. For example, when a reliable transmission is activated and one packet is transmitted correctly, the reliable transmission is deactivated.

On the basis of the above-mentioned solution, a terminal device can activate a reliable transmission when data transmission is failed and a transmission time does not exceed the maximum transmission time, the probability of successful data transmission within the maximum transmission time can be improved, and the transmission, which is not within the maximum transmission time, of other data is not affected.

One of the characteristics of the above example is that once the transmission of target data is failed, activation of a reliable transmission is triggered. Specifically, when the transmission time of the target data is less than the maximum transmission time, once the transmission of target data is failed, activation of a reliable transmission is triggered. Optionally, the terminal device may also consider other factors when activating or deactivating a reliable transmission. That is, when the transmission of target data is failed and certain conditions are met, the reliable transmission is activated. Specifically, on the premise that a reliable transmission is not activated and the transmission time of the target data is less than the maximum transmission time, the terminal device may activate or deactivate the reliable transmission under certain conditions, such as according to a trigger condition. Wherein S320 may include at least one of the following conditions:
activating a reliable transmission when the transmission of target data is failed and when transmission parameters meet a trigger condition;
deactivating a reliable transmission when the transmission of target data is failed and when transmission parameters do not meet a trigger condition;
deactivating a reliable transmission when the transmission of target data is successful and when transmission parameter meet a trigger condition; and
deactivating a reliable transmission when the transmission of target data is successful and when transmission parameters do not meet a trigger condition.

Activating or deactivating reliable transmission based on a trigger condition can improve the transmission reliability in the survival time and prevent the waste of reliable transmission resources.

The transmission parameters may include at least one of the following parameters:
existence of the target data (i.e. whether the target data exists or not), the number of successive failed packet transmissions (e.g. the number of successive failed packet transmissions of the target data, the number of successive failed packet transmissions belonging to an identical object (the object may be a TSC stream, DRB, PDU session, QoS flow, etc.)), a time point at which the reliable transmission is activated, channel quality, and a timer or its running status (i.e. timer status, specifically, such as whether the timer is running, whether it is started, whether it is expired, etc.).

When the transmission parameter includes the number of the failed transmissions of target data, the trigger condition may include that the number of the failed transmissions of target data is greater than or equal to a number threshold.

For example, the current reliable transmission is not activated, the transmission time of the target data is less than the survival time, and the number threshold in the trigger condition is 2. If the target data is transmitted unsuccessfully twice, the terminal device may activate a reliable transmission; if the target data is transmitted unsuccessfully once, the terminal device may deactivate the reliable transmission.

For example, if the current reliable transmission is not activated, the number threshold in the trigger condition is 2, and there are two successive packets which are transmitted falsely corresponding to a TSC stream, the terminal device may activate a reliable transmission. If there is only one packet which is transmitted falsely corresponding to a TSC stream, or there are no successive two packets which are transmitted falsely, or there is a packet which is transmitted correctly before the number of packets which are transmitted continuously falsely does not reach the number threshold, the terminal device may deactivate the reliable transmission.

The terminal device can record the number of failed transmissions through a counter, and the value of the counter is increased by 1 every time the target data is failed to be transmitted. When the transmission of target data is successful, the counter is reset to 0. The above failed transmission is, for example, a failed packet transmission or successive fail packet transmissions.

Optionally, the terminal device may record the number of failed transmissions through a counter, with an initial number of 0. This counter is incremented by 1 whenever there is one packet which is transmitted falsely. When there is a packet successfully transmitted before the number threshold is reached, the counter is reset. The above failed transmission is, for example, a failed packet transmission or successive failed packet transmissions.

In addition, the network may indicate or configure the number threshold.

When a transmission parameter includes a time point at which the reliable transmission is activated, a trigger condition may include that a transmission time of the target data coincides with the time point at which the reliable transmission is activated.

For example, the current reliable transmission is not activated, the transmission time of the target data is less than the survival time, and the time point at which the reliable transmission is activated in the trigger condition is the second TSC service cycle after timing from the transmission time. If the transmission time of the target data reaches the second TSC service cycle (i.e., the transmission time coincides with the time point of the reliable transmission ) and the transmission of target data is failed, the terminal device can activate the reliable transmission. If the transmission time of the target data has not reached the second TSC service cycle, the terminal device may deactivate the reliable transmission. The transmission time may be timed from the first time point, and the two TSC service cycles are an offset value from the first time point, which may be preset, or configured by the network device, or indicated by the network device.

When the transmission parameter includes channel quality, the trigger condition may include a result of a comparison of the channel quality with a channel quality threshold. In particular, trigger conditions may include that the channel quality is less than or equal to a first channel quality threshold, and/or that the channel quality is greater than or equal to a second channel quality threshold.

Channel quality may be expressed by Reference Signal Receiving Power (RSRP) or other parameters. The first channel quality threshold is a channel quality threshold preset, or configured by a network device, for example, it may be an RSRP threshold. The first channel quality threshold may be a channel quality threshold of the current serving cell and/or another cell.

For example, the first channel quality threshold is the channel quality threshold of the current serving cell, and the channel quality is less than or equal to the channel quality threshold of the current serving cell, a reliable transmission is activated. For another example, the first channel quality threshold is the channel quality threshold of a neighboring cell, and when the channel quality is greater than or equal to the channel quality threshold of the neighboring cell, a reliable transmission is activated. For another example, the first channel quality threshold is the channel quality threshold of the current serving cell and the channel quality threshold of the neighboring cell, and when the channel quality is less than or equal to the channel quality threshold of the current serving cell, and when the channel quality is greater than or equal to the channel quality threshold of the neighboring cell, a reliable transmission is activated.

Two examples of activating or deactivating a reliable transmission based on channel quality are provided in the following.

Example one is shown in FIG. 5.

The reliable transmission is a duplication transmission, the transmission time of target data does not exceed the survival time, and other transmission parameters meet a trigger condition for activating the reliable transmission. The terminal device may first determine whether multiple channel quality thresholds are currently configured.

If the first channel quality threshold is an only channel quality threshold configured, then, when the channel quality is less than or equal to the first channel quality threshold, the terminal device activates the duplication transmission, and the quantity of RLC entities corresponding to the duplication transmission is a first quantity, which is, for example, 2, as shown in FIG. 5. The first quantity may be preset, or may be configured by the network device. When the channel quality is greater than the first channel quality threshold, the terminal device may deactivate the duplication transmission.

If the first channel quality threshold is not an only channel quality threshold configured, for example, the terminal device is configured with three channel quality thresholds, the terminal device may perform the following method.

When the channel quality is greater than the first channel quality threshold, the terminal device may deactivate the duplication transmission.

When the channel quality is less than the first channel quality threshold, and when the channel quality is greater than or equal to the second channel quality threshold, the terminal device may activate the duplication transmission. The quantity of RLC entities corresponding to the duplication transmission is a second quantity, which is, for example, 2 as shown in FIG. 5. The second quantity may be preset, or may be configured by a network device.

When the channel quality is less than the second channel quality threshold, and when the channel quality is greater than or equal to the third channel quality threshold, the terminal device may activate the duplication transmission. The quantity of RLC entities corresponding to the duplication transmission is a third quantity, which is, for example, 3 as shown in FIG. 5. The third quantity may be preset, or may be configured by a network device.

When the channel quality is less than the third channel quality threshold, the terminal device may activate the duplication transmission. The quantity of RLC entities corresponding to the duplication transmission is a fourth quantity, which is, for example, 4 as shown in FIG. 5. The fourth quantity may be preset, or may be configured by a network device.

After the terminal device activates duplication transmission, the target data can be transmitted using the corresponding quantity of RLC entities. The terminal device can select several RLC entities with the best channel quality for duplication transmission according to the channel quality of the carrier corresponding to each RLC entity.

In Example 1, activating the duplication transmission may be enhancing the reliability of the duplication transmission, for example, increasing the number of packets of the duplication transmission. Deactivating the duplication transmission may be reducing the reliability of the duplication transmission, that is, reducing the number of packets of the duplication transmission.

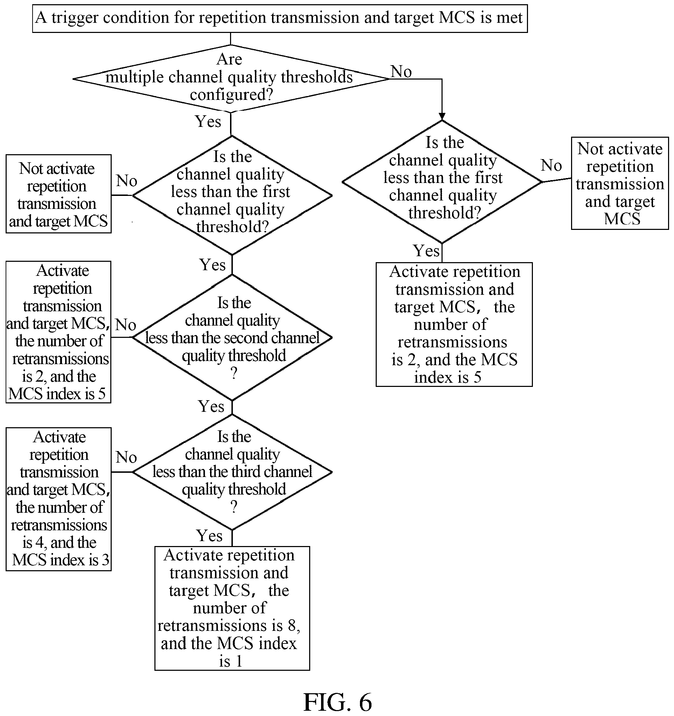

Example two is shown in FIG. 6.

A reliable transmission is a repetition transmission and/or a transmission mode including target MCS, a transmission time of target data does not exceed a survival time, and other transmission parameters all meet a trigger condition for activating the reliable transmission. The terminal device may first determine whether multiple channel quality thresholds are currently configured.

If the first channel quality threshold is an only channel quality threshold configured, then, when the channel quality is less than or equal to the first channel quality threshold, the terminal device activates a repetition transmission and/or a transmission mode including the target MCS. The number of retransmissions for the repetition transmission is a first number of retransmissions, and the index of the target MCS is a first index. Wherein, the first number of retransmissions is, for example, 2 as shown in FIG. 6, and the first index is, for example, 5 as shown in FIG. 6. When the channel quality is greater than the first channel quality threshold, the terminal device may deactivate the duplication transmission.

If the first channel quality threshold is not an only channel quality threshold configured, for example, the terminal device is configured with three channel quality thresholds; the terminal device may perform the following method.

When the channel quality is greater than the first channel quality threshold, the terminal device may deactivate the duplication transmission.

When the channel quality is less than the first channel quality threshold, and when the channel quality is greater than or equal to the second channel quality threshold, the terminal device may activate a repetition transmission and/or a transmission including the target MCS. The number of retransmissions for the repetition transmission is a second number of retransmissions, and the index of the target MCS is a second index. Wherein, the second number of retransmissions is, for example, 2 as shown in FIG. 6, and the second index is, for example, 5 as shown in FIG. 6. The second number of retransmissions and the second index may be preset, or may be configured by a network device.

When the channel quality is less than the second channel quality threshold, and when the channel quality is greater than or equal to the third channel quality threshold, the terminal device may activate a repetition transmissions and/or a transmission containing the target MCS. The number of retransmissions for the repetition transmission is a third number of retransmissions, and the index of the target MCS is a third index. Wherein, the third number of retransmissions is, for example, 4 as shown in FIG. 6, and the first index is, for example, 3 as shown in FIG. 6. The third number of retransmissions and the third index may be preset, or may be configured by a network device.

When the channel quality is less than the third channel quality threshold, the terminal device may activate a repetition transmission and/or a transmission including the target MCS. The number of retransmissions for the repetition transmission is a fourth number of retransmissions, and the index of the target MCS is a fourth index. Wherein, the fourth number of retransmissions is, for example, 8 as shown in FIG. 6, and the fourth index is, for example, 1 as shown in FIG. 6. The fourth number of retransmissions and the fourth index may be preset, or may be configured by a network device.

After the terminal device activates a repetition transmission and/or a transmission mode including the target MCS, the target data may be transmitted using the corresponding number of retransmissions and/or the target MCS.

The network device may also configure more channel quality thresholds for the terminal device.

In Example 2, activating the repetition transmission may be to enhance the reliability of the repetition transmission, for example increasing the number of data packets that are repetitively transmitted. Deactivating the repetition transmission may be to reduce the reliability of the repetition transmission, i.e. to reduce the number of data packets that are repetitively transmitted.

It should be noted that a repetition transmission, a transmission mode including a target MCS and a duplication transmission may be used alone, or at least two of the three may be used together or configured.

In the above example, if the terminal device is configured with a channel quality threshold, the complexity of activating a reliable transmission may be reduced, and if the terminal device is configured with multiple channel quality thresholds, the waste of transmission resources may be reduced. The network device may configure different channel quality thresholds for the terminal device depending on the actual situation (e.g. the processing capacity of the terminal device).

In addition, the network device may also send first indication information to the terminal device, wherein the first indication information is used to indicate the trigger condition used when the terminal device activates the reliable transmission. For example, the first indication information may indicate that the trigger condition includes only a first channel quality threshold, or that the trigger condition includes a first channel quality threshold, a second channel quality threshold, and a third channel quality threshold. The network device may also send second indication information to the terminal device, wherein the second indication information is used to indicate whether to activate a reliable transmission function. Optionally, the first indication information and the second indication information are the same indication information.

Of course, the contents of the first indication information and/or the second indication information may also be determined by the UE or predefined.

In the present application, the transmission time is a time starting from a first time point, the first time point may be one of:
an arrival time point or a transmission time point of the first data packet, of which a transmission is failed, a starting time point of a transmission cycle, an ending time point of the transmission cycle and a time point of transmission failure;
an arrival time point or a transmission time point of the last tolerable data packet, of which a transmission is failed, a starting time point of a transmission cycle, an ending time point of the transmission cycle and a time point of transmission failure;
an arrival time point or a transmission time point of the N-th tolerable data packet, of which a transmission is failed, a starting time point of a transmission cycle, an ending time point of the transmission cycle and a time point of transmission failure, where N is a positive integer.

The arrival time point or the transmission time point may be a time point for packeting MAC PDU, a time point for completing packeting, a time point for delivering to the physical layer, a transmission time point of the physical layer, or a time point for transmitting packets through an antenna.

If the transmission cycle of a data packet is a TSC service cycle, then the starting time point of the transmission cycle is related to a starting time point of the TSC service cycle or an arrival time point of a packet. For example, the starting time point of the transmission cycle is the starting time point of the TSC service cycle or the arrival time point of the packet +/-delta, or a time point within a time period near the starting time point of the TSC service cycle or the arrival time point of the packet. The ending time point of the transmission cycle is related to the ending time point of the TSC service cycle or an arrival time point of the next packet. For example, the ending time point of the transmission cycle is the ending time point of the TSC service cycle or the arrival time point of the next packet +/-delta, or a time point within a time period near the ending time point of the TSC service cycle or the arrival time point of the next packet.

The time point of transmission failure may be a time point at which the terminal device receives a negative acknowledge (NACK) sent by the network device, such as a time point at which NACK is received once or N times. It may also be a preset time point, for example, if the terminal device does not receive feedback information after a data packet has been sent for a period of time, the terminal device may determine the ending time point of the period as the time point of transmission failure.

The last tolerable packet which is transmitted falsely may be the last packet which is transmitted falsely in the survival time. For example, if the survival time is three TSC service cycles, the terminal device can transmit one data packet in each TSC service cycle, and the data packets in the first TSC service cycle and the second TSC service cycle are all failed to be transmitted, the last tolerable packet which is transmitted falsely may be the data packet in the third TSC service cycle. The terminal device may activate a reliable transmission at a starting time point of the third TSC service cycle, or at an arrival time point or a transmission time point or a time point of transmission failure of a data packet within the third TSC service cycle.

Similarly, if the survival time is 3 TSC service cycles, the terminal device may transmit one data packet in each TSC service cycle, and a data packet in the first TSC service cycle is transmitted falsely, then the Nth tolerable packet which is transmitted falsely may be the second data packet. The terminal device may activate a reliable transmission at a starting time point or an ending time point of the second TSC service cycle, or at an arrival time point or a transmission time point or a time point of transmission failure of a data packet within the second TSC service cycle.

In addition, the network device may send indication information to the terminal device to indicate a transmission time point or a first time point.

In the following, two more examples of methods for activating or deactivating a reliable transmission are provided.

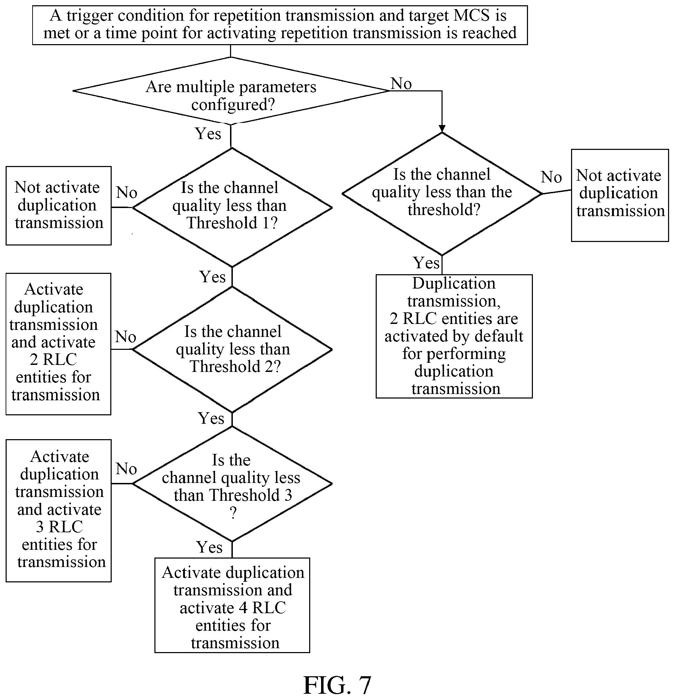

Embodiment 1, duplication is activated or deactivated based on a survival time. For example, it is as shown in FIG. 7.

The reason and beneficial effect of the embodiment 1 are deduced: in order to ensure the requirement of the survival time, that is, an end-to-end transmission of at least one packet is completed correctly within a certain time. Specifically, for an application or service, when a survival time = a cycle, after the current packet is failed to be transmitted, the latter packet must be transmitted correctly. Therefore, based on the survival time, the activation or deactivation of duplication of specific objects (DRB, QoS flow, etc.) can be determined to ensure the reliable transmission of services and the effective utilization of resources at the same time.

The inventive points are as follows.
1. The UE determines whether to activate or deactivate the duplication transmission based on the survival time.
2. Based on 1, the function of UE-survival time based activation/deactivation is configured by a network.
3. Based on 1, the network indicates a time point or a trigger condition, of using the duplication transmission.
4. Based on 1, the network further configures a threshold for activating the duplication when the survival time configuration is indicated. The UE determines the number of activated RLC entities or copies based on the survival time and the threshold.
5. Based on 1, a threshold for the number of copies or RLC entities is determined when the network configures to activate the duplication transmission. The UE determines the number of activated RLC entities or copies based on the threshold.

The specific process of the solution is as follows.
1. The base station acquires the auxiliary information of TSN service, such as a survival time corresponding to a PDU session or QoS flow or DRB.
2. The base station sends RRC configuration information to the UE, including the following.
   1) An indication of whether the function of the UE-survival time based duplication activation/deactivation is enabled, such as indication or configuration.
   2) A configured survival time. Specifically, the survival time is configured corresponding to a PDU session or QoS flow or DRB, for example, the survival time is 1 TSC business cycle.
   3) A threshold for activating the duplication. Specifically, the threshold is configured for the corresponding PDU session or QoS flow or DRB, further including a threshold for activating 3 RLC entities or 4 RLC entities. Specifically, the threshold is a comparison threshold for the channel quality of the current serving cell or a specific cell.

For example: (a threshold is given, or a threshold is not given)
when the channel quality is greater than or equal to Threshold 1, the duplication transmission is not activated. When the channel quality is less than Threshold 1, the duplication transmission is activated. At this point, the number of RLC entities of the duplication may be 2, or may be configured.

For another example: (multiple thresholds are given, and the thresholds have a mapping relationship with the number of duplication copies)
when the channel quality is greater than or equal to Threshold 1, the duplication transmission is not activated. When the channel quality is less than Threshold 1, but greater than or equal to Threshold 2, the duplication transmission is activated, two RLC entities are used. When the channel quality is less than Threshold 2, but greater than or equal to Threshold 3, the duplication transmission of three RLC entities is activated, and when the channel quality is less than Threshold 3, the duplication transmission of four RLC entities is activated.

4) A time point or a trigger condition (for example, N successive packets are transmitted unsuccessfully; specifically, counting may be started from the first packet that is failed to be transmitted, and when the counting starts and there is a data packet that is transmitted correctly, the counting is reset to 0) for activating duplication. Specifically, the time point or trigger condition is configured for the corresponding PDU session or QoS flow or DRB.

For the time point, specifically, the UE is indicated to activate the duplication based on a second offset time point of the first time point. The first time point is an arrival time point or a packet transmission time point of the first packet that is failed to be transmitted, before a packet transmission cycle, an end point of a packet transmission cycle, a time point of packet transmission failure, and an arrival time point or a packet transmission time point of the last tolerable packet which is transmitted unsuccessfully (e.g. the survival time is three cycles, and the last tolerable packet is the third one of packets which are transmitted continuously falsely; of course, it may also be a packet of a specific sequence number, which may be predefined, or determined by UE, or configured by a network), before a packet transmission cycle, an end point of the packet transmission cycle, and a time point of packet transmission failure. The second offset is an offset value corresponding to the first time point. When the second offset time point of the first time point is reached, the UE determines that a condition for activating the duplication is met.

Note: the first time point and the second offset may also be pre-configured or determined by UE itself.

3. The UE receives the configuration information from the base station. According to the threshold, the survival time, the first time, the second offset, and the like, the UE determines:
1) Whether to activate duplication;
2) Time Point at which the duplication is activated;
3) Number of copies activated at the duplication;
4) Select an RLC entity for the duplication transmission.

In particular, the UE starts or restarts a timer of the corresponding survival time when sending each packet; or, if the previous packet is transmitted successfully, the UE starts or restarts the timer of the corresponding survival time when sending the next successive packet.

For example, when the survival time is 3 cycles, the UE activates the duplication transmission when the third successive packet is transmitted falsely. If the RSRP of the current serving cell is less than Threshold 1 and greater than Threshold 2, the UE determines to activate three RLC entities to transmit duplication, that is, to activate three copies. Accordingly, the UE further selects three RLC entities with the best channel quality according to the channel quality of the carrier corresponding to each RLC entity, to perform duplication transmission.

Extension solution 1 of Embodiment 1: when triggering duplication based on the survival time, the transmission of duplication may be activated directly at the time point of activating the duplication or when a trigger condition is met. It is also possible to further determine the threshold at the time point for activating the duplication or when the trigger condition is met, for example, when the channel quality (such as RSRP) is less than the threshold, the duplication transmission is activated.

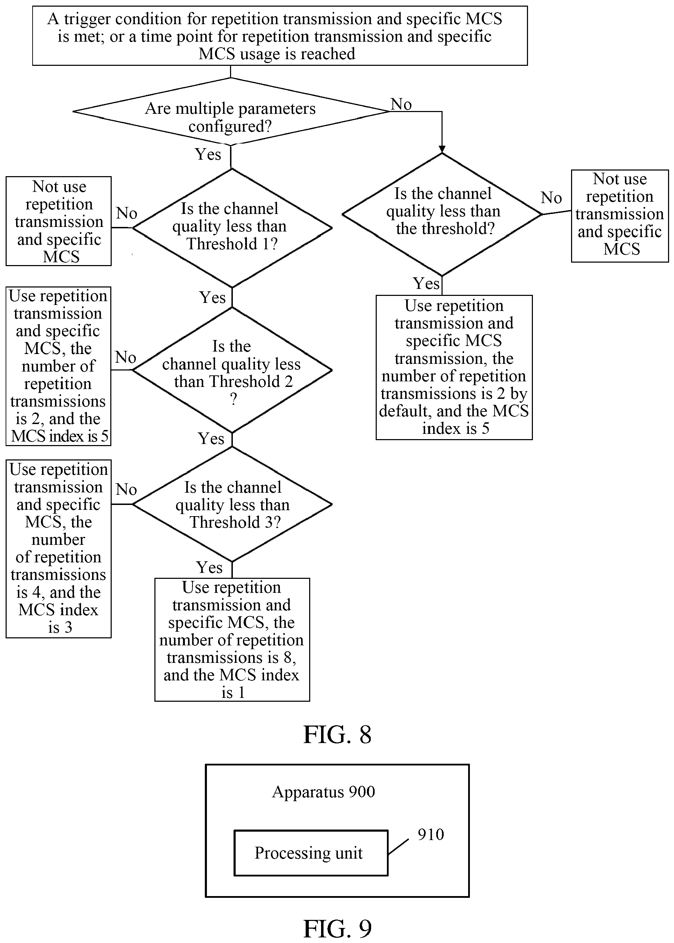

Embodiment 2 (activating repetition transmission / using specific MCS based on survival time). As shown in FIG. 8.

The reason and beneficial effect of the embodiment 2 are deduced: in order to ensure the requirement of the survival time, that is, an end-to-end transmission of at least one packet is completed correctly within a certain time. Specifically, for an application or service, when a survival time = a cycle, after the current packet is failed to be transmitted, the latter packet must be transmitted correctly. Therefore, based on the survival time, the activation or deactivation of repetition of specific objects (DRB, QoS flow, etc.) and/or the use of low MCS can be determined to ensure the reliable transmission of services and the effective utilization of resources.

The inventive points are as follows:
1. The UE determines whether to activate or deactivate the repetition transmission and/or use a specific MCS based on the survival time.
2. Based on 1, functions of UE-survival time based repetition transmission and/or specific MCS activation/deactivation are configured by a network.
3. Based on 1, the network indicates a time point, or a trigger condition, of using a repetition transmission and/or a particular MCS.
4. Based on 1, the network configures a repetition parameter, including at least the number of repetitions. Further, multiple thresholds and multiple numbers of repetitions may be given. Specifically, the UE may determine which number of repetitions to be used for transmission based on a comparison of the channel quality with the threshold.
5. Based on 1, a network configures an MCS parameter, such as an MSC index or an MCS table. Further, multiple thresholds and multiple MCS parameters may be given. Specifically, the UE may determine which MCS parameter to be used for transmission according to the comparison of the channel quality with the threshold.

The specific process of the solution is as follows.
1. The base station acquires the auxiliary information of TSN service, such as a survival time corresponding to a PDU session or QoS flow or DRB.
2. The base station sends RRC configuration information to the UE, including the following.
   1) An indication of whether the function of the UE-survival time based repetition transmission and/or the specific MCS activation/deactivation is enabled, such as an indication or configuration.
   2) Parameters for indicating a survival time. Specifically, the parameters are configured corresponding to a PDU session or QoS flow or DRB, for example, the survival time is 1 TSC business cycle.
   3) Parameters for configuring the repetition, including the time-frequency resources of the repetition transmission and the number of repetition transmissions, such as 2, 4 and 8. Specifically, the repetition parameters are configured for the corresponding PDU session or QoS flow or DRB. Further, multiple thresholds and multiple numbers of repetitions may be given. Specifically, the UE may determine which number of repetitions to be used for transmission based on a comparison of the channel quality with the threshold. Specifically, the threshold is a comparison threshold for the channel quality of the current serving cell or a specific cell.

For example: (a threshold is given, or a threshold is not given)
when the channel quality is greater than or equal to Threshold 1, the repetition transmission is not activated. When the channel quality is less than Threshold 1, the repetition transmission is activated. The number of repetitions which is only given is used for transmission.

For another example: (multiple thresholds are given, and the thresholds have a mapping relationship with the number of repetitions)
when the channel quality is greater than or equal to Threshold 1, the repetition transmission is not activated. When the channel quality is less than Threshold 1, but greater than or equal to Threshold 2, the repetition transmission is activated and the first number of repetitions is used. When the channel quality is less than Threshold 2, but greater than or equal to Threshold 3, the second number of repetitions is used for repetition transmission. When the channel quality is less than Threshold 3, the third number of repetitions is used for repetition transmission.

4) Parameters for configuring MCS, such as MCS table, MCS index, MCS value, etc. Specifically, the MCS parameters are configured for the corresponding PDU session or QoS flow or DRB. Further, multiple thresholds and multiple numbers of MCSs may be given. Specifically, the UE may determine which MCS to be used for transmission according to the comparison of the channel quality with the threshold. Specifically, the threshold is a comparison threshold for the channel quality of the current serving cell or a specific cell.

Specific determination process may be referred to 3).

5) A time point or a trigger condition (for example, N successive packets are transmitted unsuccessfully. Specifically, counting may be started from the first packet that is failed to be transmitted, and when the counting starts and there is a data packet that is transmitted correctly, the counting is reset to 0) for activating repetition transmission and/or using a particular MCS. Specifically, the time point or trigger condition is configured for the corresponding PDU session or QoS flow or DRB.

For the time point, specifically, the UE is indicated to activate the repetition and/or the specific MCS based on the second offset time point of the first time point. The first time point is an arrival time point or a packet transmission time point of the first packet that is failed to be transmitted, before a packet transmission cycle, an end point of a packet transmission cycle, and an arrival time point or a packet transmission time point of the last tolerable packet which is transmitted unsuccessfully (e.g. the survival time is three cycles, and the last tolerable packet is the third one of packets which are transmitted continuously falsely; of course, it may also be a packet of a specific sequence number, which may be predefined, determined by UE, or configured by a network), before a packet transmission cycle, and an end point of the packet transmission cycle. The second offset is an offset value corresponding to the first time point. When the second offset time point of the first time point is reached, the UE determines that a condition for activating a repetition and/or a specific MCS is met.

Note: the first time point and the second offset may also be pre-configured or determined by UE itself.

3. The UE receives the configuration information from the base station. According to the threshold, the number of repetitions, the MCS, the first time point, the second offset, and the like, the UE determines
1) Whether to activate repetition and/or specific MCS
2) Time point at which the repetition and/or specific MCS is activated.

In particular, the UE starts or restarts a timer of the corresponding survival time when sending each packet; or, if the previous packet is transmitted successfully, the UE starts or restarts the timer of the corresponding survival time when sending the next successive packet.

For example, when the survival time is 3 cycles, the UE activates the repetition and/or the specific MCS when the third successive packet is transmitted falsely. If the RSRP of the current serving cell is less than Threshold 1 and greater than Threshold 2, the UE determines to use repetition transmission, the number of repetitions is 4, and a specific MCS index is used, which is 5.

Extension solution 1 of Embodiment 2: when triggering the repetition and/or the specific MCS based on the survival time, the repetition and/or the specific MCS may be used for transmission directly at the time point of activating the repetition and/or the specific MCS or when a trigger condition is met. It is also possible to further determine the threshold at the time point of activating the repetition and/or the specific MCS or when the trigger condition is met, for example, when the channel quality (such as RSRP) is less than the threshold, the repetition and/or the specific MCS is used for transmission.

The examples of the method for activating or deactivating a reliable transmission according to the present application are described in detail above. It may be understood that in order to achieve the above functions, an apparatus for activating or deactivating a reliable transmission includes corresponding hardware structures and/or software modules for performing the various functions. Those skilled in the art may easily realize that the present application may be implemented in a form of hardware or a combination of hardware and computer software in combination with units and algorithm acts of various examples described in the embodiments disclosed herein. Whether a function is performed in a form of hardware or computer software driven hardware depends on specific applications and design constraint conditions of the technical solutions. Those skilled in the art may use different methods to implement the described functions for each particular application, but such implementation should not be considered to be beyond the scope of the present application.

Division for functional units may be performed on the apparatus for activating or deactivating a reliable transmission according to the above method examples in the present application. For example, various functions may be divided into various functional units, or two or more functions may be integrated into one unit. The above integrated unit may be implemented in a form of hardware, or may be implemented in a form of software function unit. It should be noted that, the division of the units in the present application is illustrative, and is merely the division of logical functions. Other division modes may be used in actual implementations.

FIG. 9 is a schematic diagram of a structure of an apparatus for activating or deactivating a reliable transmission according to the present application. The apparatus 900 includes a processing unit 910.

The processing unit 910 is configured to acquire a maximum transmission time; and activate or deactivate a reliable transmission according to the maximum transmission time, wherein the reliable transmission includes at least one of the following: a duplication transmission, a repetition transmission, and a transmission mode including a target MCS.

Optionally, when the reliable transmission is not activated or deactivated, the processing unit 901 is specifically configured to activate the reliable transmission when target data exists or activate the reliable transmission when a transmission of target data is failed.

Optionally, when the reliable transmission is not activated or deactivated, the processing unit 901 is specifically configured to deactivate the reliable transmission when the target data does not exist or deactivate the reliable transmission when the transmission of target data is successful.

Optionally, the processing unit 910 is further configured to determine a threshold of a number of tolerable failed packet transmissions according to the maximum transmission time.

Optionally, when the reliable transmission is not activated or deactivated, the processing unit 901 is specifically configured to activate the reliable transmission when the number of failed packet transmissions or successive failed packet transmissions is greater than or equal to the threshold.

Optionally, when the reliable transmission is not activated or deactivated, the processing unit 901 is specifically configured to deactivate the reliable transmission when the number of failed packet transmissions or successive failed packet transmissions is less than or equal to the threshold.

Optionally, the processing unit 910 is specifically configured to activate the reliable transmission when the target data exists or the transmission of target data is failed and when the trigger condition is met.

Optionally, the processing unit 910 is specifically configured to deactivate the reliable transmission when the target data does not exist or the transmission of target data is successful and when the trigger condition is not met.

Optionally, the trigger condition includes at least one of the following: whether the target data exists, the number of successive failed packet transmissions, a time point at which the reliable transmission is activated, channel quality, and a timer status.

Optionally, in the case that there is one channel quality threshold, the channel quality threshold includes a first channel quality threshold, and when the channel quality is less than or equal to the first channel quality threshold,
when the reliable transmission includes the duplication transmission, the quantity of Radio Link Control RLC entities corresponding to the duplication transmission is a first quantity; and/or,
when the reliable transmission includes the repetition transmission, the number of retransmissions corresponding to the repetition transmission is a first number of retransmissions; and/or,
when the reliable transmission includes the transmission mode including the target MCS, an index of the target MCS is a first index.

Optionally, at least one of the first quantity, the first number of retransmissions, and the first index is configured by a network device.

Optionally, in the case that there are a plurality of channel quality thresholds, the channel quality thresholds include a first channel quality threshold and a second channel quality threshold, wherein the first channel quality threshold is greater than the second channel quality threshold; when the channel quality is greater than or equal to the second channel quality threshold and less than the first channel quality threshold,
when the reliable transmission includes the duplication transmission, the quantity of RLC entities corresponding to the duplication transmission is a second quantity; and/or,
when the reliable transmission includes repetition transmission, the number of retransmissions corresponding to the repetition transmission is a second number of retransmissions; and/or,
when the reliable transmission includes the transmission mode including the target MCS, an index of the target MCS is a second index.

Optionally, in the case that there are a plurality of channel quality thresholds, the channel quality thresholds include a first channel quality threshold, a second channel quality threshold and a third channel quality threshold, wherein the first channel quality threshold is greater than the second channel quality threshold, and the second channel quality threshold is greater than the third channel quality threshold; when the channel quality is greater than or equal to the third channel quality threshold and less than the second channel quality threshold,
when the reliable transmission includes the duplication transmission, the quantity of RLC entities corresponding to the duplication transmission is a third quantity; and/or,
when the reliable transmission includes repetition transmission, the number of retransmissions corresponding to the repetition transmission is a third number of retransmissions; and/or,
when the reliable transmission includes the transmission mode including the target MCS, an index of the target MCS is a third index.

Optionally, in the case that there are a plurality of channel quality thresholds, the channel quality thresholds include a first channel quality threshold, a second channel quality threshold and a third channel quality threshold, wherein the first channel quality threshold is greater than the second channel quality threshold, and the second channel quality threshold is greater than the third channel quality threshold; when the channel quality is less than the third channel quality threshold,
when the reliable transmission includes the duplication transmission, the quantity of RLC entities corresponding to the duplication transmission is a fourth quantity; and/or,
when the reliable transmission includes repetition transmission, the number of retransmissions corresponding to the repetition transmission is a fourth number of retransmissions; and/or,
when the reliable transmission includes the transmission mode including the target MCS, an index of the target MCS is a fourth index.

Optionally, the apparatus 900 further includes a receiving unit configured to receive first indication information, which is used for indicating the trigger condition; and/or, receive second indication information, which is used for indicating whether to active a reliable transmission function.

Optionally, the transmission time of the target data is less than the maximum transmission time.

Optionally, the transmission time is a time starting from a first time point, the first time point being one of the following:
an arrival time point or a transmission time point of the first data packet, of which a transmission is failed, a starting time point of a transmission cycle, an ending time point of the transmission cycle, and a time point of transmission failure;
an arrival time point or a transmission time point of the last tolerable data packet, of which a transmission is failed, a starting time point of a transmission cycle, an ending time point of the transmission cycle, and a time point of transmission failure;
an arrival time point or a transmission time point of the N-th tolerable data packet, of which a transmission is failed, a starting time point of a transmission cycle, an ending time point of the transmission cycle, and a time point of transmission failure, where N is a positive integer.

Optionally, the processing unit 910 is further configured to start or restart a timer, wherein the timer is used for activating the reliable transmission or avoiding that data transmission does not meet the requirement of the maximum transmission time.

Optionally, a running time of the timer is related to the maximum transmission time.

Optionally, the running time of the timer is the maximum transmission time.

Optionally, the processing unit 910 is specifically configured to
start or restart the timer when transmission of first data is completed; or,
start or restart the timer after the first data is successfully transmitted and when the target data starts to be transmitted, wherein the first data and the target data are two data with adjacent transmission times.

Optionally, the processing unit 910 is specifically configured to
acquire the maximum transmission time from a first node.

Optionally, the first node includes a terminal and/or a network device.

Optionally, the network device includes at least one of a base station, a CNC, and a TSN node.

Optionally, when the maximum transmission time is acquired from the network device, the maximum transmission time is carried in a dedicated Radio Resource Control RRC message and/or a broadcast message.

Optionally, a granularity corresponding to the maximum transmission time is one of the following granularities: DRB, QoS flow, TSC flow, PDU session.

Optionally, the apparatus 900 further includes a receiving unit configured to receive configuration information, which is used for configuring a function of activating or deactivating the reliable transmission according to the maximum transmission time.

Optionally, the maximum transmission time is a survival time.

A specific way for the processor 900 to implement the method for activating or deactivating a reliable transmission and resulted beneficial effects may be referred to in the relevant description in the method embodiments.

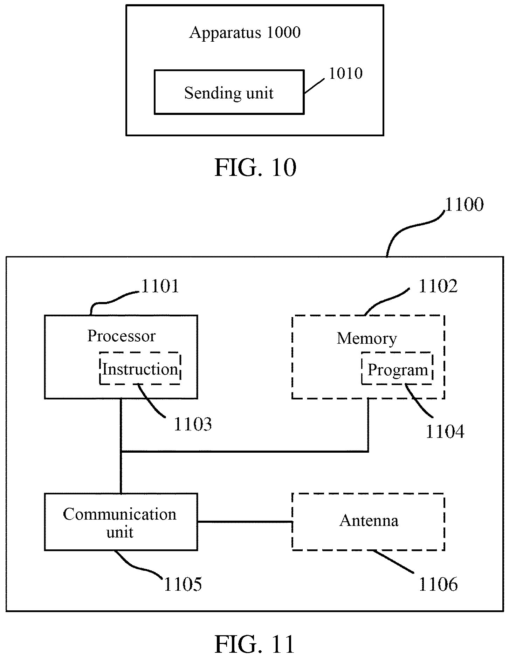

FIG. 10 is a schematic diagram of a structure of an apparatus for activating or deactivating a reliable transmission according to the present application. The apparatus 1000 includes a sending unit 1010.

The sending unit 1010 is configured to send a maximum transmission time to a first terminal device; the maximum transmission time is used for the first terminal device to activate or deactivate a reliable transmission, wherein the reliable transmission including at least one of a duplication transmission, a repetition transmission, and a transmission mode including a target MCS.

Optionally, the sending unit 1010 is specifically configured to send the maximum transmission time to the first terminal device through an SMF.

Optionally, the sending unit 1010 is specifically configured to send the maximum transmission time to the first terminal device through a base station.

Optionally, the sending unit 1010 is specifically configured to send the maximum transmission time to the first terminal device through a second terminal device.

Optionally, the apparatus 1000 further includes a sending unit configured to send indication information to the first terminal device, wherein the indication information is used for indicating a trigger condition, which is used for the first terminal device to activate or deactivate the reliable transmission.

Optionally, the apparatus 1000 further includes a sending unit configured to send configuration information to the first terminal device, wherein the configuration information is used for configuring a function of activating or deactivating the reliable transmission according to the maximum transmission time.

Optionally, the maximum transmission time is a survival time.

A specific mode for the apparatus 1000 to implement the method for activating or deactivating a reliable transmission and the resulted beneficial effects may be referred to the related description in the method embodiments.

FIG. 11 shows a schematic diagram of a structure of a communication device according to the present application. The dashed line in FIG. 11 indicates that the unit or the module is optional. A device 1100 may be configured to implement the method described in the above method embodiments. The device 1100 may be a terminal device, or a network device, or a chip.

The device 1100 includes one or more processors 1101, wherein the one or more processors 1101 may support the device 1100 to implement the methods in the method embodiments corresponding to FIG. 2 to FIG. 6. The processor 1101 may be a general purpose processor or a special purpose processor. For example, the processor 1101 may be a central processing unit (CPU). The CPU may be configured to control the device 1100, execute software programs, and process data of the software programs. The device 1100 may further include a communication unit 1105 configured to implement input (reception) and output (transmission) of signals.

For example, the device 1100 may be a chip, and the communication unit 1105 may be an input and/or output circuit of the chip, or the communication unit 1105 may be a communication interface of the chip, which may be a component of a terminal device or a network device or another wireless communication device.

For another example, the device 1100 may be a terminal device or a network device, and the communication unit 1105 may be a transceiver of the terminal device or the network device, or the communication unit 1105 may be a transceiver circuit of the terminal device or the network device.

The device 1100 may include one or more memories 1102 on which a program 1104 is stored, wherein the program 1104 may be executed by the processor 1101 to generate instructions 1103, enabling the processor 1101 to execute the method described in the above method embodiments according to the instructions 1103. Optionally, data may also be stored in the memory 1102. Optionally, the processor 1101 may also read data stored in the memory 1102, wherein the data may be stored at a same storage address as the program 1104, or at a different storage address from the program 1104.

The processor 1101 and the memory 1102 may be arranged separately or integrated together, for example, they may be integrated on a system on chip (SOC) of a terminal device.

The device 1100 may also include an antenna 1106. The communication unit 1105 is configured to implement a transceiving function of the device 1100 by the antenna 1106.

A specific mode for the processor 1101 to implement the method for activating or deactivating a reliable transmission may refer to the related description in the method embodiments.

It should be understood that each act of the foregoing method embodiments may be implemented by a logic circuit in a form of hardware in the processor 1101 or instructions in a form of software. The processor 1101 may be a CPU, a digital signal processor (DSP), an application specific integrated circuit (ASIC), a field programmable gate array (FPGA), or another programmable logic device, such as a discrete gate, transistor logic device, or discrete hardware component.

The present application further provides a computer program product which, when executed by the processor 1101, implements the method described in any of the method embodiments in the present application.

The computer program product may be stored in the memory 1102, for example, the computer program may be a program 1104. The program 1104 is finally converted into an executable object file that can be executed by the processor 1101 after subjected to processing procedures such as preprocessing, compiling, assembling and linking.

The present application further provides a computer readable storage medium, on which a computer program is stored, and when the computer program is executed by a computer, the method described in any method embodiment in the present application is implemented. The computer program may be a high-level language program or an executable object program.

The computer readable storage medium, for example, is the memory 1102. The memory 1102 may be volatile memory or nonvolatile memory, or the memory 1102 may include both volatile memory and nonvolatile memory. The non-volatile memory may be a read-only memory (ROM), a programmable ROM (PROM), an erasable PROM (EPROM), an electrically erasable EPROM (EEPROM), or a flash memory. The volatile memory may be a Random Access Memory (RAM) which serves as an external cache. By illustration of example but not restriction, RAMs of many forms are available such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM).

Those skilled in the art can clearly understand that for the convenience and conciseness of description, the specific working processes and technical effects of the above-described devices and equipment can refer to the corresponding processes and technical effects in the above-mentioned method embodiments, and will not be described in detail here.

In several embodiments provided by the present application, the disclosed systems, apparatuses and methods may be implemented in other ways. For example, some features of the method embodiments described above may be ignored or not performed. For example, the apparatus embodiments described above are only illustrative, the division of the units is only a logical function division, and there may be other division manners in actual implementation. Multiple units or components may be combined or integrated into another system. In addition, the coupling between units or components can be direct coupling or indirect coupling, which includes electrical, mechanical or other forms of connections.

It should be understood that in various embodiments of the present application, serial numbers of the foregoing processes do not mean an order of execution. The order of execution of the processes should be determined according to functions and internal logics of the processes, and should not impose any limitation on implementation processes of the embodiments of the present application.

In addition, the terms "system" and "network" are often used interchangeably herein. The term "and/or" in this document is merely an association relation describing associated objects, indicating that there may be three relations, for example, A and/or B may indicate three cases: A alone, A and B, and B alone. In addition, the symbol "/" in this document generally indicates that objects before and after the symbol "/" have an "or" relationship.

In general, the above descriptions are only preferred embodiments of the present application and are not intended to limit the protection scope of the present application. Any modification, equivalent substitution, improvement, etc. made within the spirit and principle of the present application shall be included in the protection scope of the present application.

## Claims

1. A method for activating or deactivating a reliable transmission, comprising:
acquiring a maximum transmission time; and
activating or deactivating a reliable transmission according to the maximum transmission time, wherein the reliable transmission comprises at least one of the following: a duplication transmission, a repetition transmission, and a transmission mode comprising a target Modulation and Coding Scheme MCS.

2. The method of claim 1, wherein when the reliable transmission is not activated or deactivated, activating or deactivating the reliable transmission according to the maximum transmission time comprises:
activating the reliable transmission when target data exists; or,
activating the reliable transmission when a transmission of target data is failed.

3. The method of claim 1, wherein when the reliable transmission is not activated or deactivated, activating or deactivating the reliable transmission according to the maximum transmission time comprises:
deactivating the reliable transmission when target data does not exist; or,
deactivating the reliable transmission when a transmission of target data is successful.

4. The method of claim 1, further comprising:
determining, according to the maximum transmission time, a threshold of a number of tolerable failed packet transmissions.

5. The method of claim 4, wherein when the reliable transmission is not activated or deactivated, activating or deactivating the reliable transmission according to the maximum transmission time comprises:
activating the reliable transmission when a number of failed packet transmissions or successive failed packet transmissions is greater than or equal to the threshold.

6. The method of claim 4, wherein when the reliable transmission is not activated or deactivated, activating or deactivating the reliable transmission according to the maximum transmission time comprises:
deactivating the reliable transmission when a number of failed packet transmissions or successive failed packet transmissions is less than or equal to the threshold.

7. The method of claim 2 or 5, wherein when the target data exists or the transmission of target data is failed, activating the reliable transmission comprises:
activating the reliable transmission when a trigger condition is met.

8. The method of claim 3 or 6, wherein when the target data does not exist or the transmission of target data is successful, deactivating the reliable transmission comprises:
deactivating the reliable transmission when a trigger condition is not met.

9. The method of claim 7 or 8, wherein the trigger condition comprises at least one of the following:
whether the target data exists, a number of successive failed packet transmissions, a time point at which the reliable transmission is activated, channel quality, and a timer status.

10. The method of Claim 9, wherein, in a case that there is one channel quality threshold, the channel quality threshold comprises a first channel quality threshold, and when the channel quality is less than or equal to the first channel quality threshold,
when the reliable transmission comprises the duplication transmission, a quantity of Radio Link Control RLC entities corresponding to the duplication transmission is a first quantity; and/or,
when the reliable transmission comprises the repetition transmission, a number of retransmissions corresponding to the repetition transmission is a first number of retransmissions; and/or,
when the reliable transmission comprises the transmission mode comprising the target MCS, an index of the target MCS is a first index.

11. The method of claim 10, wherein at least one of the first quantity, the first number of retransmissions, and the first index is configured by a network device.

12. The method of claim 9, wherein in a case that there are a plurality of channel quality thresholds, the channel quality thresholds comprise a first channel quality threshold and a second channel quality threshold, wherein the first channel quality threshold is greater than the second channel quality threshold; when the channel quality is greater than or equal to the second channel quality threshold and less than the first channel quality threshold,
when the reliable transmission comprises the duplication transmission, a quantity of RLC entities corresponding to the duplication transmission is a second quantity; and/or,
when the reliable transmission comprises repetition transmission, the number of retransmissions corresponding to the repetition transmission is a second number of retransmissions; and/or,
when the reliable transmission comprises the transmission mode comprising the target MCS, an index of the target MCS is a second index.

13. The method of claim 9, wherein in a case that there are a plurality of channel quality thresholds, the channel quality thresholds comprise a first channel quality threshold, a second channel quality threshold and a third channel quality threshold, wherein the first channel quality threshold is greater than the second channel quality threshold, and the second channel quality threshold is greater than the third channel quality threshold; when the channel quality is greater than or equal to the third channel quality threshold and less than the second channel quality threshold,
when the reliable transmission comprises the duplication transmission, a quantity of RLC entities corresponding to the duplication transmission is a third quantity; and/or,
when the reliable transmission comprises repetition transmission, the number of retransmissions corresponding to the repetition transmission is a third number of retransmissions; and/or,
when the reliable transmission comprises the transmission mode comprising the target MCS, an index of the target MCS is a third index.

14. The method of claim 9, wherein, in a case that there are a plurality of channel quality thresholds, the channel quality thresholds comprise a first channel quality threshold, a second channel quality threshold and a third channel quality threshold, wherein the first channel quality threshold is greater than the second channel quality threshold, and the second channel quality threshold is greater than the third channel quality threshold; when the channel quality is less than the third channel quality threshold,
when the reliable transmission comprises the duplication transmission, a quantity of RLC entities corresponding to the duplication transmission is a fourth quantity; and/or,
when the reliable transmission comprises repetition transmission, the number of retransmissions corresponding to the repetition transmission is a fourth number of retransmissions; and/or,
when the reliable transmission comprises the transmission mode comprising the target MCS, an index of the target MCS is a fourth index.

15. The method of any one of claims 7 to 9, further comprising:
receiving first indication information, wherein the first indication information is used for indicating the trigger condition; and/or,
receiving second indication information, wherein the second indication information is used for indicating whether to activate a reliable transmission function.

16. The method of any one of claims 2, 3, 7, 8, 9, wherein a transmission time of the target data is less than the maximum transmission time.

17. The method of claim 16, wherein the transmission time is a time starting from a first time point, the first time point is one of the following:
an arrival time point or a transmission time point of a first data packet, of which a transmission is failed, a starting time point of a transmission cycle, an ending time point of the transmission cycle, and a time point of transmission failure;
an arrival time point or a transmission time point of a last tolerable data packet, of which a transmission is failed, a starting time point of a transmission cycle, an ending time point of the transmission cycle, and a time point of transmission failure;
an arrival time point or a transmission time point of an N-th tolerable data packet, of which a transmission is failed, a starting time point of a transmission cycle, an ending time point of the transmission cycle, and a time point of transmission failure, where N is a positive integer.

18. The method of any one of claims 1 to 17, further comprising:
starting or restarting a timer, wherein the timer is used for activating the reliable transmission or avoiding that data transmission does not meet a requirement of a maximum transmission time.

19. The method of claim 18, wherein a running time of the timer is related to the maximum transmission time.

20. The method of claim 19, wherein the running time of the timer is the maximum transmission time.

21. The method of any one of claims 18 to 20, wherein starting or restarting the timer comprises:
starting or restarting the timer when transmission of first data is completed ; or,
starting or restarting the timer after the first data is transmitted successfully and when the target data starts to be transmitted, wherein the first data and the target data are two data with adjacent transmission times.

22. The method of any one of claims 1 to 21, wherein acquiring the maximum transmission time comprises:
acquiring the maximum transmission time from a first node.

23. The method of claim 22, wherein the first node comprises a terminal and/or a network device.

24. The method of claim 23, wherein the network device comprises at least one of a base station, a Central Network Control CNC, and a Time Sensitive Network TSN node.

25. The method of claim 23 or 24, wherein when the maximum transmission time is acquired from the network device, the maximum transmission time is carried in a dedicated Radio Resource Control RRC message and/or a broadcast message.

26. The method of any one of claims 1 to 25, wherein a granularity corresponding to the maximum transmission time is one of the following granularities:
Data Radio Bearer DRB, Quality of Service QoS flow, Time Sensitive Communication TSC flow, Packet Data Unit PDU session.

27. The method of any one of claims 1 to 26, further comprising:
receiving configuration information, wherein the configuration information is used for configuring a function of activating or deactivating the reliable transmission according to the maximum transmission time.

28. The method of any one of claims 1 to 27, wherein the maximum transmission time is a survival time.

29. A method for activating and deactivating a reliable transmission, comprising:
sending a maximum transmission time to a first terminal device; wherein the maximum transmission time is used for the first terminal device to activate or deactivate a reliable transmission, wherein the reliable transmission comprising at least one of a duplication transmission, a repetition transmission, and a transmission mode comprising a target Modulation and Coding Scheme MCS.

30. The method of claim 29, wherein sending the maximum transmission time to the first terminal device comprises:
sending the maximum transmission time to the first terminal device through a Session Management Function SMF.

31. The method of claim 29 or 30, wherein sending the maximum transmission time to the first terminal device comprises:
sending the maximum transmission time to the first terminal device through a base station.

32. The method of any one of claims 29 to 31, wherein sending the maximum transmission time to the first terminal device comprises:
sending the maximum transmission time to the first terminal device through a second terminal device.

33. The method of any one of claims 29 to 32, further comprising:
sending first indication information to the first terminal device, wherein the first indication information is used for indicating a trigger condition, the trigger condition is used for the first terminal device to activate or deactivate the reliable transmission; and/or,
sending second indication information to the first terminal device, wherein the second indication information is used for indicating whether to activate a reliable transmission function.

34. The method of any one of claims 29 to 33, further comprising:
sending configuration information to the first terminal device, wherein the configuration information is used for configuring a function of activating or deactivating the reliable transmission according to the maximum transmission time.

35. The method of any one of claims 29 to 34, wherein the maximum transmission time is a survival time.

36. An apparatus for activating or deactivating a reliable transmission, comprising a processing unit configure to:
acquire a maximum transmission time; and
activate or deactivate a reliable transmission according to the maximum transmission time, wherein the reliable transmission comprises at least one of the following: a duplication transmission, a repetition transmission, and a transmission mode comprising a target Modulation and Coding Scheme MCS.

37. The apparatus of claim 36, wherein when the reliable transmission is not activated or deactivated, the processing unit is specifically configured to
activate the reliable transmission when target data exists; or,
activate the reliable transmission when a transmission of target data is failed.

38. The apparatus of claim 36, wherein when the reliable transmission is not activated or deactivated, the processing unit is specifically configured to
deactivate the reliable transmission when target data does not exist; or,
deactivate the reliable transmission when a transmission of target data is successful.

39. The apparatus of claim 36, wherein the processing unit is further configured to
determine, according to the maximum transmission time, a threshold of a number of tolerable failed packet transmissions.

40. The apparatus of claim 39, wherein when the reliable transmission is not activated or deactivated, the processing unit is specifically configured to
activate the reliable transmission when a number of failed packet transmissions or successive failed packet transmissions is greater than or equal to the threshold.

41. The apparatus of claim 39, wherein when the reliable transmission is not activated or deactivated, the processing unit is specifically configured to
deactivate the reliable transmission when a number of failed packet transmissions or successive failed packet transmission errors is less than or equal to the threshold.

42. The apparatus of claim 37 or 40, wherein when the target data exists or the transmission of target data is failed, the processing unit is specifically configured to
activate the reliable transmission when a trigger condition is met.

43. The apparatus of claim 38 or 41, wherein when the target data does not exist or the transmission of target data is successful, the processing unit is specifically configured to
deactivate the reliable transmission when a trigger condition is not met.

44. The apparatus of claim 42 or 43, wherein the trigger condition comprises at least one of the following:
whether the target data exists, a number of successive failed packet transmissions, a time point at which the reliable transmission is activated, channel quality, and a timer status.

45. The apparatus of claim 44, wherein in a case that there is one channel quality threshold, the channel quality threshold comprises a first channel quality threshold, and when the channel quality is less than or equal to the first channel quality threshold,
when the reliable transmission comprises the duplication transmission, a quantity of Radio Link Control RLC entities corresponding to the duplication transmission is a first quantity; and/or,
when the reliable transmission comprises the repetition transmission, a number of retransmissions corresponding to the repetition transmission is a first number of retransmissions; and/or,
when the reliable transmission comprises the transmission mode comprising the target MCS, an index of the target MCS is a first index.

46. The apparatus of claim 45, wherein at least one of the first quantity, the first number of retransmissions, and the first index is configured by a network device.

47. The apparatus of claim 44, wherein in a case that there are a plurality of channel quality thresholds, the channel quality thresholds comprise a first channel quality threshold and a second channel quality threshold, wherein the first channel quality threshold is greater than the second channel quality threshold; when the channel quality is greater than or equal to the second channel quality threshold and less than the first channel quality threshold,
when the reliable transmission comprises the duplication transmission, a quantity of RLC entities corresponding to the duplication transmission is a second quantity; and/or,
when the reliable transmission comprises the repetition transmission, the number of retransmissions corresponding to the repetition transmission is a second number of retransmissions; and/or,
when the reliable transmission comprises the transmission mode comprising the target MCS, an index of the target MCS is a second index.

48. The apparatus of claim 44, wherein in a case that there are a plurality of channel quality thresholds, the channel quality thresholds comprise a first channel quality threshold, a second channel quality threshold and a third channel quality threshold, wherein the first channel quality threshold is greater than the second channel quality threshold, and the second channel quality threshold is greater than the third channel quality threshold; when the channel quality is greater than or equal to the third channel quality threshold and less than the second channel quality threshold,
when the reliable transmission comprises the duplication transmission, a quantity of RLC entities corresponding to the duplication transmission is a third quantity; and/or,
when the reliable transmission comprises the repetition transmission, the number of retransmissions corresponding to the repetition transmission is a third number of retransmissions; and/or,
when the reliable transmission comprises the transmission mode comprising the target MCS, an index of the target MCS is a third index.

49. The apparatus of claim 44, wherein in a case that there are a plurality of channel quality thresholds, the channel quality thresholds comprise a first channel quality threshold, a second channel quality threshold and a third channel quality threshold, wherein the first channel quality threshold is greater than the second channel quality threshold, and the second channel quality threshold is greater than the third channel quality threshold; when the channel quality is less than the third channel quality threshold,
when the reliable transmission comprises the duplication transmission, a quantity of RLC entities corresponding to the duplication transmission is a fourth quantity; and/or,
when the reliable transmission comprises repetition transmission, the number of retransmissions corresponding to the repetition transmission is a fourth number of retransmissions; and/or,
when the reliable transmission comprises the transmission mode comprising the target MCS, an index of the target MCS is a fourth index.

50. The apparatus of any one of claims 42 to 44, further comprising a receiving unit configured to
receive first indication information, wherein the first indication information is used for indicating the trigger condition; and/or,
receive second indication information, wherein the second indication information is used for indicating whether to activate a reliable transmission function.

51. The apparatus of any one of claims 37, 38, 42, 43, 44, wherein a transmission time of the target data is less than the maximum transmission time.

52. The apparatus of claim 51, wherein the transmission time is a time starting from a first time point, the first time point is one of the following:
an arrival time point or a transmission time point of a first data packet, of which a transmission is failed, a starting time point of a transmission cycle, an ending time point of the transmission cycle, and a time point of transmission failure;
an arrival time point or a transmission time point of a last tolerable data packet, of which a transmission is failed, a starting time point of a transmission cycle, an ending time point of the transmission cycle, and a time point of transmission failure;
an arrival time point or a transmission time point of an N-th tolerable data packet, of which a transmission is failed, a starting time point of a transmission cycle, an ending time point of the transmission cycle, and a time point of transmission failure, where N is a positive integer.

53. The apparatus of any one of claims 36 to 52, wherein the processing unit is further configured to
start or restart a timer, wherein the timer is used for activating the reliable transmission or avoiding that data transmission does not meet a requirement of a maximum transmission time.

54. The apparatus of claim 53, wherein a running time of the timer is related to the maximum transmission time.

55. The apparatus of claim 54, wherein the running time of the timer is related to the maximum transmission time, which comprises:
the running time of the timer is the maximum transmission time.

56. The apparatus of any one of claims 53 to 55, wherein the processing unit is further configured to
start or restart the timer when transmission of first data is completed; or,
start or restart the timer after the first data is transmitted successfully and when the target data starts to be transmitted, wherein the first data and the target data are two data with adjacent transmission times.

57. The apparatus of any one of claims 36 to 56, wherein the processing unit is further configured to
acquire the maximum transmission time from a first node.

58. The apparatus of claim 57, wherein the first node comprises a terminal and/or a network device.

59. The apparatus of claim 58, wherein the network device comprises at least one of a base station, a Central Network Control CNC, and a Time Sensitive Network TSN node.

60. The apparatus of claim 58 or 59, wherein when the maximum transmission time is acquired from the network device, the maximum transmission time is carried in a dedicated Radio Resource Control RRC message and/or a broadcast message.

61. The apparatus of any one of claims 36 to 60, wherein a granularity corresponding to the maximum transmission time is one of the following granularities:
Data Radio Bearer DRB, Quality of Service QoS flow, Time Sensitive Communication TSC flow, Packet Data Unit PDU session.

62. The apparatus of any one of claims 36 to 61, further comprising a receiving unit configured to
receive configuration information, wherein the configuration information is used for configuring a function of activating or deactivating the reliable transmission according to the maximum transmission time.

63. The apparatus of any one of claims 36 to 62, wherein the maximum transmission time is a survival time.

64. An apparatus for activating or deactivating a reliable transmission, comprising a sending unit, configure to
send a maximum transmission time to a first terminal device; wherein the maximum transmission time is used for the first terminal device to activate or deactivate a reliable transmission, wherein the reliable transmission comprising at least one of a duplication transmission, a repetition transmission, and a transmission mode comprising a target Modulation and Coding Scheme MCS.

65. The apparatus of claim 64, wherein the sending unit is specifically configured to
send the maximum transmission time to the first terminal device through a Session Management Function SMF.

66. The apparatus of claim 64 or 65, wherein the sending unit is specifically configured to send the maximum transmission time to the first terminal device through a base station.

67. The apparatus of any one of claims 64 to 66, wherein the sending unit is specifically configured to
send the maximum transmission time to the first terminal device through a second terminal device.

68. The apparatus of any one of claims 64 to 67, wherein the sending unit is further configured to
send first indication information to the first terminal device, wherein the first indication information is used for indicating a trigger condition, the trigger condition is used for the first terminal device to activate or deactivate the reliable transmission; and/or,
send second indication information to the first terminal device, wherein the second indication information is used for indicating whether to activate a reliable transmission function.

69. The apparatus of any one of claims 64 to 68, wherein the sending unit is specifically configured to
send configuration information to the first terminal device, wherein the configuration information is used for configuring a function of activating or deactivating the reliable transmission according to the maximum transmission time.

70. The apparatus of any one of claims 64 to 69, wherein the maximum transmission time is a survival time.

71. A terminal device, comprising a processor and a memory, wherein the memory is configured to store a computer program and the processor is configured to call and run the computer program stored in the memory to perform the method of any one of claims 1 to 28.

72. A network device, comprising a processor and a memory, wherein the memory is configured to store a computer program, and the processor is configured to call and run the computer program stored in the memory to perform the method of any one of claims 29 to 35.

73. A chip, comprising a processor, configured to call and run a computer program from a memory, to enable a device installed with the chip to perform the method of any one of claims 1 to 28 or the method of any one of claims 29 to 35.

74. A computer readable storage medium, configured to store a computer program, which enables a computer to perform the method of any one of claims 1 to 28 or the method of any one of claims 29 to 35.

75. A computer program product comprising computer program instructions, which enable a computer to perform the method of any one of claims 1 to 28 or the method of any one of claims 29 to 35.

76. A computer program, enabling a computer to perform the method of any one of claims 1 to 28 or the method of any one of claims 29 to 35.
